(19)

**Europäisches Patentamt**
**European Patent Office**
**Office européen des brevets**

(11) **EP 1 816 158 B1**

(12) **EUROPEAN PATENT SPECIFICATION**

(45) Date of publication and mention
of the grant of the patent:
**03.02.2016 Bulletin 2016/05**

(51) Int Cl.:
*C08L 23/10* *(2006.01)*   *C08J 9/00* *(2006.01)*

(21) Application number: **06002368.6**

(22) Date of filing: **06.02.2006**

(54) **Extruded linear polypropylene for the manufacture of cellular material**

Extrudiertes lineares Polypropylen zur Herstellung von zellenförmigem Material

Linéaire Polypropylène linéaire extrudée pour produire une matière cellulaire

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**08.08.2007 Bulletin 2007/32**

(73) Proprietor: **Borealis Technology Oy**
**06101 Porvoo (FI)**

(72) Inventors:
• **Malm, Bo**
**2110, Espoo (FI)**
• **Stadlbauer, Manfred**
**4040 Linz (AT)**
• **Folland, Rick**
**1370 Jodoigne (BE)**

• **DeMink, Paul**
**4240, Freistadt (AT)**

(74) Representative: **Kador & Partner**
**Corneliusstraße 15**
**80469 München (DE)**

(56) References cited:
**EP-A- 1 323 779     US-A- 5 929 127**

• **PATENT ABSTRACTS OF JAPAN vol. 007, no. 235 (C-191), 19 October 1983 (1983-10-19) & JP 58 129025 A (HITACHI KASEI KOGYO KK), 1 August 1983 (1983-08-01)**
• **PATENT ABSTRACTS OF JAPAN vol. 015, no. 193 (C-0832), 17 May 1991 (1991-05-17) & JP 03 050245 A (FURUKAWA ELECTRIC CO LTD:THE), 4 March 1991 (1991-03-04)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention relates to extruded linear polypropylene, in particular extruded linear polypropylene beads suitable for technical foam applications and protective packaging. Furthermore, the present invention is related to the use of the extruded linear polypropylene for foamed articles.

In the recent years, there have been efforts undertaken to replace foamed polystyrene by foamed polypropylene products. It is known that foamed polypropylene products possess chemical inertia, heat resistance, stiffness and impact resistance characteristics far superior to those of foamed polystyrene. Therefore, there is an increasing demand using foamed polypropylene in application fields where the foamed polystyrene cannot be used or in fields where the foamed polystyrene is widely used, such as for example in insulation and in packaging, but does not completely satisfy the demands of the uses in terms of performance. For the technical foam application and the protecting packaging, the natural requirements for the used polymers are their foamability, high stiffness and high impact strength. One essential requirement that an extruded polyolefin achieves these desired requirements is a relatively low density of the foamed products. Especially foamed articles with a high impact strength and being simultaneously rather light, are achieved in cases where these products have only a closed cell structure. There is a prejudice in literature that these products can only be achieved when the used extruded polyolefin has a high melt strength, as described for example in EP 1323779 A, US A 5929127, JP S 58129025 or JP H 0350245.

Therefore, it is the object of the present invention to provide an extruded linear polypropylene suitable for technical foam applications and protective packaging which are an alternative to the known products characterized by a high melt strength.

The finding of the present invention is to provide an extruded linear polypropylene with a high foamability number.

Hence, the present invention is related to an extruded linear polypropylene having

a) $MFR_2$ of 0.01 to 1.00 g/10 min and

b) a foamability number (FN) of higher than 0.25 N, whereby the foamability number is defined by the integral

$$\int_{\lambda=0}^{\lambda.max} F \cdot d\lambda,$$ wherein $\lambda$ is the stretch ratio and F is the force given in cN recorded as a function of the stretch ratio $\lambda$ and

c) a branching index g' of 0.95 to 1.00.

Surprisingly, it has been found that such an extruded linear polypropylene possesses a good foamability, high stiffness and high impact strength.

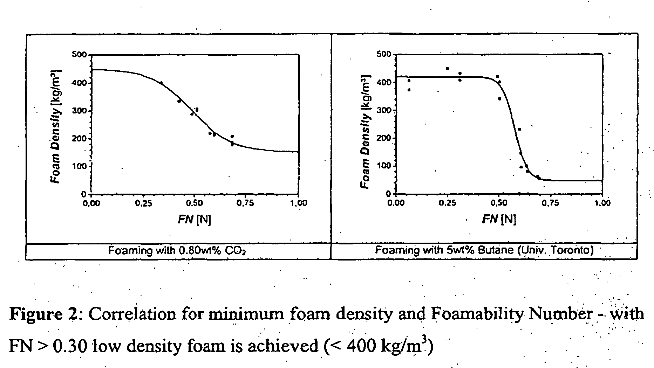

It has been in particular found that there is a correlation of minimum foam density and foamability number FN, i.e. with a high foamability number, very low foam density articles can be obtained (see Fig. 2).

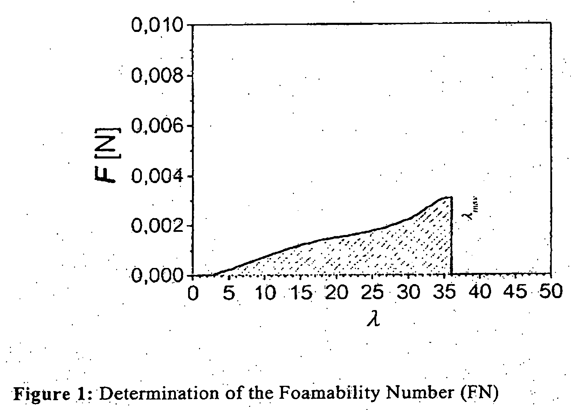

The foamability number is determined from the area under the Rheotenscurve, i.e. the integral defined by the force given in cN as a function of the stretch ratio $\lambda$. The Rheotens test, as used for this invention, to obtain the Rheotens-curve as inter alia given in Figure 1 is explained in detail in the experimental section. Preferably, the foamability number (FN) is higher than 0.3 N, more preferably higher than 0.4 N and most preferably higher than 0.45 N. In a preferred embodiment, the foamability number is 0.5 N or higher.

However, not only the foamability number of the extruded linear polypropylene must be rather high but also the molecular weight of the extruded linear polypropylene must be in the range as given above. More preferably, the $MFR_2$ is in the range of 0.1 to 0.6 g/10 min, still more preferably in the range of 0.2 to 0.4. In a preferred embodiment, the $MFR_2$ is of about 0.25 g/10 min. The melt flow rate (MFR) is an indicator of the molecular weight of the polymer used. The melt flow rate mainly depends on the average molecular weight. This is due to the fact that long molecules render the material a lower flow tendency than short molecules. An increase in molecular weight means a decrease in the MFR-value. The melt flow rate (MFR) is measured in g/10 min of the polymer discharged through a defined dye under specified temperature and pressure conditions and the measure of the viscosity of the polymer, which, in turn, for each type of polymer is mainly influenced by its molecular weight but also by its degree of branching. The melt flow rate measured under a load of 2.16 kg at 230°C (ISO 1133) is denoted as $MFR_2$.

Preferably, the extruded linear polypropylene has a melt strength lower than 3 cN. More preferably, the melt strength is lower than 2 cN and most preferred, the melt strength is lower than 1.6. In a preferred embodiment, the melt strength is about 1.5 cN.

The advantage of having low melt strength is (a) such polymers are easy to make in reactor processes without modification and (b) the cell nucleation is more pronounced, i.e. the foam is more fine-cellular (see P. Spitael and Ch. W. Macosko, Polymer Engineering and Science, November 2004, Vol. 44, No. 11).

The melt strength is measured by the Rheotens experiment. The Rheotens experiment is a quasi-isothermal fiber spinning experiment. A polymer melt pressured in a capillary dye is stretched under the action of a constant draw-down force until rupture of the filament. With the data obtained from such an experiment an extension diagram can be generated which describes the elongational behavior of the polymer melt. A good elongational behavior is needed for many polymer processes like blow molding or film blowing. Also the rupture stress of a polymer melt can be calculated with the data obtained from the Rheotens experiment. A high rupture stress is of importance for many industrial applications. In general, the melt strength and the drawability depend on the material properties of the melt and on the processing conditions of the experiment. The exact conditions under which the extruded linear polypropylene according to this invention have been measured can be deducted from the experimental section. Moreover, it is preferred that the extruded linear polypropylene has a crystallization temperature $T_c$ in the range of 110 to 135°C, more preferably, in the range of 115 to 130°C. The crystallization temperature $T_c$ has been measured with DSC according to ISO 3146 with a heating/cooling rate of 10°C. The advantage of a polymer with a crystallization temperature in the range of 110 to 135°C, more preferably in the range of 115 to 130°C is that it has been found that these polymers are particularly stiff.

In addition, it is preferred that the foamed articles of the extruded linear polypropylene shall have a rather high crystallinity. A highly structured (crystal) polymer has improved optical and mechanical properties.

Therefore, the extruded linear polypropylene shall preferably comprise an α-crystallization nucleating agent and/or a β-crystallization nucleating agent, whereby the crystallization nucleating agent is not from a metal salt. Preferably, the nucleating agent is present in an amount of 0.0001 to 1.00 wt%, more preferably in the amount of 0.001 to 0.50 wt%. Nucleating agents of polyolefin are substances with the ability to act as substrates for crystal formation by epitaxy thus increasing the number of nuclei of the system. Thereby, the nucleating agents improve the crystallization behavior in processing, i.e. decreasing the cycle time or increasing the line speed, increase the crystallinity in the final product and, additionally, influence the optical and mechanical properties in terms of improved stiffness (with α-crystallization nucleating agents) or toughness (with β-crystallization nucleating agents).

Any suitable α-nucleating agents known in the art can be used. However, it is preferred to use 1,3:2,4-bis-(3,3-dimethyl-benzylidene)-sorbitol. A further α-nucleation method, herein referred to as "BNT" is a special reactor technique, where the catalyst is pre-polymerized with monomers like vinylcyclohexan (VCH). This method is described in greater detail in e.g. EP 0 316 187 A2. For the purpose of this invention, BNT is referred to as an α-nucleating agent.

In particular suitable β-nucleation agents are quinacridone type compounds, especially quinacridone, dimethylquinacridone and dimethoxyquinacridone; quinacridonequinone type compounds, especially quinacridonequinone, a mixed crystal of 5,12-dihydro(2,3b)acridine-7,14-dione with quino(2,3b)acridine-6,7,13,14-(5H,12H)-tetrone as disclosed in EP 0 177 961 and dimethoxyquinacridonequinone; and dihydroquinacridone type compounds, especially dihydroquinacridone, di-methoxydihydroquinacridone and dibenzodihydroquinacridone.

Still further suitable ß-nucleating agents are dicarboxylic acid salts of metals from group IIa of periodic table, e.g. pimelic acid calcium salt and suberic acid calcium salt.

The extruded polyolefin is a linear polypropylene, having a branching index g' of 0.95 to 1.00, more preferable of about 1.00. The branching index g' is defined as $g'=[IV]_{br}/[IV]_{lin}$ in which g' is the branching index, $[IV_{br}]$ is the intrinsic viscosity of the branched polypropylene and $[IV]_{lin}$ is the intrinsic viscosity of the linear polypropylene having substantially the same weight average molecular weight as the branched polypropylene. Thereby, a low g'-value is an indicator for a high branched polymer. In other words, if the g'-value decreases, the branching of the polypropylene increases. Reference is made in this context to B.H. Zimm and W.H. Stockmeyer, J. Chem. Phys. 17,1301 (1949).

The intrinsic viscosity needed for determining the branching index g' is measured according to DIN ISO 1628/1, October 1999 (in Decalin at 135°C)

The linear polypropylene may be a linear propylene block-copolymer. It is in particular preferred that the extruded linear polypropylene comprises a propylene matrix and an ethylene-propylene rubber (EPR). The type of polypropylene matrix is not restricted to a specific one, as long as the matrix fulfills, together with the ethylene-propylene rubber (EPR), the above-mentioned requirements. Hence, each homopolymer or copolymer can be used. In case a copolymer is used, the comonomer content, however, shall be less than 3 wt%. Preferably, the comonomer is ethylene.

The choice of ethylene-propylene rubber (EPR) must conform with the re-quirements to be achieved, i.e. an extruded linear polypropylene with a rather high foamability number. Hence, an ethylene-propylene rubber (EPR) is needed having a high propylene amount, i.e. with a low amount of ethylene. Therefore, it is preferred that the ethylene-propylene rubber (EPR) has an ethylene content of lower than 50.0 wt%, more preferably in the range of 10.0 to 50.0 wt% and most preferably, in the range of 20.0 to 40.0 wt%. In a preferred embodiment, the ethylene content is about 33.0 wt%. Furthermore, the total amount of ethylene used in the linear polypropylene, more preferably in the linear polypropylene comprising propylene matrix and the ethylene-propylene rubber (EPR), shall be preferably less than 15.0 wt%, more preferably in the range of 4.0 to 12.0 wt%, still more preferably in the range of 5.0 to 10.0 wt%. In a preferred embodiment, the total ethylene content is about 9.0 wt%.

Furthermore, to achieve an extruded linear polypropylene suitable for the manufacture of an article having a low foaming density, the polypropylene matrix and the ethylene-propylene rubber (EPR) must be kept in a specific range. Accordingly, the extruded linear polypropylene does not have more than 30 wt% of the ethylene-propylene rubber (EPR). Therefore, the amount of polypropylene matrix must range from 70 to 95 wt%, preferably in the range of 70 to 85 wt%.

In turn, the ethylene-propylene rubber (EPR) must be in the range of 5 to 30 wt%, preferably in the range of 15 to 30 wt%.

Further, the extruded linear polypropylene as described above, is in a form of beads.

The linear extruded polypropylene is preferably produced by combining the polypropylene matrix in the form of powder or granules, the ethylene propylene rubber (EPR) and the crystallization nucleating agent, if present, in a melt mixing device.

Melt mixing devices suitable for the preferred process are discontinuous and/or continuous kneaders, twin screw extruders and single screw extruders with special mixing sections and co-kneaders. The residence time must be chosen such that a sufficiently high degree of homogenization is achieved.

The polypropylene matrix may be produced by a single or multi-stage process polymerization of propylene or propylene and an $\alpha$-olefin and/or ethylene such as bulk-polymerization, gas phase polymerization, slurry polymerization, solution polymerization or combinations thereof using conventional catalysts. A homo- or copolymer can be either made in a loop reactor or in a combination of loop and gas phase reactor. Those processes are well-known to one skilled in the art.

A suitable catalyst for the polymerization of the propylene polymer matrix is any stereo-specific catalyst for propylene polymerization which is capable of polymerizing and copolymerizing propylene and comonomers at a temperature of 40 to 100°C and at a pressure from 10 to 100 bar. Ziegler-Natta catalysts as well as metallocene catalysts are suitable catalysts.

One skilled in the art is aware of the various possibilities to produce propylene homo- and copolymers and will simply find out a suitable procedure to produce suitable polymers which are used in the present invention.

An ethylene-propylene rubber (EPR) may be produced by a known polymerization process such as solution, suspension and gas phase polymerization using conventional catalysts. Ziegler-Natta catalysts as well as a metallocene catalyst are suitable catalysts.

A widely used process is the solution polymerization. Ethylene, propylene and catalyst systems are polymerized in an excess of hydrocarbon solvent. Stabilizers and oils, if used, are added directly after polymerization. The solvent and unreacted monomers are then flashed off with hot water or steam, or with mechanical devolatilization. The polymer, which is in crumb form, is dried with de-watering in screens, mechanical pressures or drying ovens. The crumb is formed into wrapped balls or extruded into pellets.

The suspension polymerization process is a modification of bulk polymerization. The monomers and catalyst system are injected into the reactor filled with propylene. The polymerization takes place immediately, forming crumbs of polymer that are not soluble in propylene.

Flashing off the propylene and comonomer complete the polymerization process.

The gas phase polymerization technology consists of one or more vertical fluidized beds. Monomers and nitrogen in gas form along with catalyst are fed to the reactor and solid product is removed periodically. Heat of reaction is removed through the use of the circulating gas that also serves to fluidize the polymer bed. Solvents are not used thereby eliminating the need for solvent stripping, washing and drying.

The production of ethylene-propylene rubber (EPR) is also described in detail in e.g. US 3,300,459, US 5,919,877, EP 0 060 090 A1 and in a company publication by EniChem "DUTRAL, Ethylene-propylene Elastomers", pages 1 to 4 (1991).

Alternatively, ethylene-propylene rubber (EPR), which is commercially available and which fulfills the indicated requirements, can be used.

Alternatively, the propylene polymer matrix and the ethylene-propylene rubber may be produced in a series of reactors, i.e. starting with the production of the propylene matrix in a loop reactor and transferring the production into a gas phase reactor where the ethylene-propylene rubber is polymerized.

Furthermore, the present invention also comprises a foam produced from the extruded linear polypropylene as described above or from extruded linear polypropylene bead as mentioned above. Thereby, it is preferred that the foam has a density lower than 400 g/m$^3$, more preferably lower than 250 g/m$^3$ and most preferred lower than 180 kg/m$^3$.

Additionally the present invention is concerned with articles comprising the extruded linear polypropylene and/or extruded linear polypropylene beads and/or a foam as defined above. Furthermore, the invention is also concerned with the use of the extruded linear polypropylene as defined above to produce the foamed articles.

**Examples**

**Methods**

*Foamability Number:*

In order to measure the Foamability Number, a high pressure capillary rheometer (Type: Rheograph 2002, Göttfert Werkstoff-Prüfmaschinen GmbH, Buchen, Germany) was used to extrudate polymer strands which were stretched by means of a Rheotens melt tension apparatus (Type: 7197, Göttfert Werkstoff-Prüfmaschinen GmbH). The haul-off force F in dependence of draw-down velocity v is recorded. The test procedure is performed in a standard climatized room with controlled room temperature of 23 °C. The temperature of the rheometer was set at 200°C. A capillary of 20mm length and 1 mm diameter was used. The acceleration of the wheels of the Rheotens was set to 0.012 cm/s$^2$ for all the measurements. The diameter of the barrel was 12mm. The polymer was allowed to melt for 4 minutes. The extrusion rate of the strand is 0.0217 mm/s (equivalent to an apparent shear rate of 25s$^{-1}$). The length of the spinning line was 104mm. The haul-off force F (in N) is measured against the stretch ratio λ. This way a curve is obtained. The maximum force is called "Melt Strength". The area under curve of the force vs. stretch ratio until break of the fiber is taken as Foamability Number (FN).

**Density:**

The density has been measured according to the Archimedes principle through determining mass (m) and volume (V) of the specimen and calculating its density *(d)* accordingly *(d=m/V)*.

$$d = \frac{m}{V}$$

**Tensile modulus:**

Tensile properties such as tensile modulus, tensile stress at yield, tensile strain at yield, tensile strength, tensile strain at tensile strength, and tensile strength at break have been measured analogue to ISO 527 in extrusion direction.

**Foaming with Butane:**

A tandem foam extrusion setup is used in this study. It consists of a 5-hp extruder drive with a speed control gearbox (Brabender, Prep Center), a first 3/4" extruder (Brabender, 05-25-000) with a mixing screw (Brabender, 05-00144) of 30:1 L/D ratio, a second 1 1/2 " extruder (Killion, KN-150) with a built-in 15-hp variable speed drive unit with a 18:1 L/D ratio. The other systems include a positive displacement pump for butane injection, a diffusion enhancing device containing static mixer (omega, FMX-84441S), a gear pump (Zenith, PEP-11 1.2 cc/rev) where the volumetric displacement is properly controlled by the motor, a heat exchanger for cooling the polymer melt that contains homogenizing static mixers (Labcore Model H-04669-12), a cooling sleeve for the precise control of die temperature. The first extruder is used for the plastication of the polymer resin while the second extruder is responsible for mixing and initial cooling of the polymer melt. The gear pump controls the polymer melt flow rate and the heat exchanger further homogenizes and cools the melt. Two filamentary dies (L/D = 0.3/0.040 and 0.5/0.040 inch) were used in this study. The polypropylene material pellets blended with 0.8 wt% talc were first fed into the barrel through the hopper and were completely melted by the screw rotation. Then a metered amount of butane was injected into the extrusion barrel by a positive displacement pump and mixed intensively with the polymer melt stream. When the gas was injected into the extrusion barrel, screw generated shear fields to completely dissolve gas in the polymer melt via convective diffusion. The single-phase polymer/gas solution went through the gear pump and was fed into the heat exchanger where it was cooled to a designated temperature. The cooled polymer/gas solution entered the die and foaming occurred at the die exit through a process of thermodynamic instability induced via rapid pressure drop. The melt and die temperatures were synchronized and adjusted to 170°C.

**Foaming with Carbon Dioxide:**

A single screw foam extrusion setup was used. Extrusion experiments have been carried out using a single screw extruder (Barmag AG, Remscheid, Germany) with a diameter of 60 mm and a processing length of 40 D. It is equipped with a screw which is designed especially for the use in foam extrusion (Berstorff GmbH, Hannover, Germany). After melting and homogenising the polymer, liquid $CO_2$ is injected into the extruder barrel using a dual head membrane pump (LEWA GmbH, Leonberg, Germany) at a length of 16 D. The last 11 D of the process length are designed as a water tempered cylinder extension, which ensures an effective cooling of the melt and a precise control of the melt temperature. To improve the homogeneity of the polymer/gas solution, an additional static mixer (SMX-75, Sulzer Chemtech, Winterthur, Switzerland) is mounted between extruder and extrusion die. The melt is thermostated to 175°C and formed out using an annular die with an outlet diameter of 50 mm. The cellular extrudate is calibrated by pulling it over a cooling mandrel with a diameter of 175 mm, followed by slitting and winding. In order to improve the foam structure, a fixed amount of nucleating agent has been added - as is normally done in industrial foam production (Hydrocerol CF20E, Clariant Masterbatch GmbH, Ahrensburg, Germany).

**Example 1 (Comparison)**

An essentially linear polypropylene homopolymer with a MFR of 3.1g/10min, a melt strength of 0.020 N (2 cN) and a Foamability Number FN=0.1 N is extruded in contact with 5wt% butane. The final density of the cellular material is 450 kg/m$^3$. Low density foam is not achieved.

The foamability number of regrind material has been found to be identical to the raw material.

**Example 2 (Comparison)**

An essentially linear polyolefin material as used in example 1 with a melt strength of 0.02 N (2 cN) and a Foamability Number FN=0.1 N is extruded in contact with 0.80wt% carbon dioxide. The final density of the cellular material is 420kg/m$^3$. Low density foam is not achieved.

The foamability number of regrind material has been found to be identical to the raw material.

**Example 3 (butane, without nucleating agent)**

An essentially linear impact polypropylene has an MFR of 0.25g/10min, the total ethylene content is 9wt%, the crystallization temperature is 115°C. The ethylene content in the xylene soluble fraction is 33wt%. The intrinsic viscosity of the xylene soluble fraction is 3.1dl/g. The tensile modulus of the rigid (un-foamed) material is 1150MPa. Used material, which has a melt strength of 0.015 N (1.5 cN) and a Foamability Number FN=0.5 N is extruded in contact with 5 wt% butane. The final density of the cellular material is 40 kg/m$^3$. The tensile modulus of final parts, made from the cellular material is 60 MPa. The foamability number of regrind material has been found to be identical to the raw material.

**Example 4 (carbon dioxide, without nucleating agent)**

The raw material of example 3 is extruded in contact with 0.8 wt% carbon dioxide. The final density of the cellular material is 170 kg/m$^3$. The tensile modulus of final parts, made from the cellular material is 240 MPa.

The foamability number of regrind material has been found to be identical to the raw material.

**Example 5 (butane, with alpha nucleant)**

A raw material as in example 3, but alpha nucleated using BNT, was used. Such prepared material had a crystallization temperature of 120°C. It was foamed with butane and a cellular material of a density of 40 kg/m$^3$ was obtained. The tensile modulus of final parts, made from the cellular material, is 80MPa. The foamability number of regrind material has been found to be identical to the raw material.

**Example 6 (carbon dioxide, with alpha nucleant)**

The raw material of example 4 is foamed with carbon dioxide, subsequently quenched in a liquid. The cellular material shows a density of 170kg/m$^3$. The tensile modulus of final parts, made from the cellular material is 290MPa. The foamability number of regrind material has been found to be identical to the raw material.

**Example 7 (butane, with beta nucleant)**

The raw material of example 3 is mixed with 2000 ppm Ca-Pimelate acting as beta nucleating agent and foamed with butane, subsequently quenched in a liquid. The cellular material shows a density of 40 kg/m$^3$. The tensile modulus of final parts, made from the cellular material, is 36MPa. The foamability number of regrind material has been found to be identical to the raw material.

**Example 8 (carbon dioxide, with beta nucleant)**

The raw material of example 3 is mixed with 2000 ppm Ca-Pimelate acting as beta nucleating agent and foamed with carbon dioxide, subsequently quenched in a liquid. The cellular material shows a density of 170kg/m$^3$. The tensile modulus of final parts, made from the cellular material is 220MPa. The foamability number of regrind material has been found to be identical to the raw material.

The results of the examples are summarized in the following table.

**Table**

|  | Melt Strength [cN] | FN [N] | Nucleation | Density | Tensile Modulus [MPa] |
|---|---|---|---|---|---|
| Example 1 | 2 | 0,1 | No | 450 | |
| Example 2 | 2 | 0,1 | No | 410 | |
| Example 3 | 1,5 | 0,5 | No | 40 | 60 |
| Example 4 | 1,5 | 0,5 | No | 170 | 240 |
| Example 5 | 1,5 | 0,5 | Alpha | 40 | 80 |
| Example 6 | 1,5 | 0,5 | Alpha | 170 | 290 |
| Example 7 | 1,5 | 0,5 | Beta | 40 | 36 |
| Example 8 | 1,5 | 0,5 | Beta | 170 | 220 |

**Claims**

1. Extruded linear polypropylene having

   a) $MFR_2$, measured according to ISO 1133 under a load of 2.16 kg at 230 °C, of 0.01 to 1.00 g/10min and
   b) a foamability number (FN) of higher than 0.25 N whereby the foamability number is defined by the integral

   $$\int_{\lambda=0}^{\lambda max} F \cdot d\lambda,$$ wherein $\lambda$ is the stretch ratio and F is the force given in cN recorded as a function of the stretch ratio $\lambda$
   c) a branching index g' of 0.95 to 1.00.

2. Extruded linear polypropylene according to claim 1 having a melt strength lower than 3 cN.

3. Extruded linear polypropylene according to claim 1 or 2 having a crystallization temperature $T_c$, measured with DSC according to ISO 3146 with a heating/cooling rate of 10 °C, of 110 to 135°C.

4. Extruded linear polypropylene according to any one of the claims 1 to 3 comprising a $\alpha$-crystallization nucleating agent and/or a $\beta$-crystallization nucleating agent.

5. Extruded linear polypropylene according claim 4, whereby the linear polypropylene is a linear propylene block-copolymer.

6. Extruded linear polypropylene according to claim 5, whereby the linear polypropylene has an ethylene content of less than 15 wt%.

7. Extruded linear polypropylene according to any one of the claims 5 and 6, whereby the polypropylene comprises a polypropylene matrix and an ethylene-propylene rubber (EPR).

8. Extruded linear polypropylene according to claim 7, whereby the ethylene propylene rubber (EPR) has an ethylene content of less than 50 wt%.

9. Beads comprising an extruded linear polypropylene according to any one of the claims 1 to 8.

10. Foam comprising an extruded linear polypropylene of one of the preceding claims 1 to 8.

11. Foam according to claim 10, wherein the foam has a density lower than 400 kg/m$^3$.

12. Article comprising an extruded linear polypropylene according to any one of the claims 1 to 8 and/or beads according to claim 9 and/or a foam according to any one of claims 10 to 11.

**13.** Use of extruded linear polypropylene according to any one of the claims 1 to 8 or beads according to claim 9 to produce a foamed article.

**Patentansprüche**

**1.** Extrudiertes lineares Polypropylen, das Folgendes aufweist:

a) einen $MFR_2$ von 0,01 bis 1,00 g/10 min, gemessen gemäß ISO 1133 unter einer Last von 2,16 kg bei 230 °C,
b) eine Schäumbarkeitszahl (FN) von mehr als 0,25 N, wobei die Schäumbarkeitszahl durch das Integral

$$\int_{\lambda=0}^{\lambda max} F \cdot \lambda$$ definiert ist, wobei $\lambda$ das Streckungsverhältnis und F die Kraft ist, angegeben in cN, und zwar erfasst als eine Funktion des Streckungsverhältnisses A, und
c) einen Verzweigungsindex g' von 0,95 bis 1,00.

**2.** Extrudiertes lineares Polypropylen nach Anspruch 1, das eine Schmelzfestigkeit von weniger 3 cN hat.

**3.** Extrudiertes lineares Polypropylen nach Anspruch 1 oder 2, das eine Kristallisationstemperatur $T_c$ von 110 bis 135 °C hat, gemessen mittels DSC gemäß ISO 3146 mit einer Erhitzung/Abkühl-Rate von 10 °C.

**4.** Extrudiertes lineares Polypropylen nach einem der Ansprüche 1 bis 3, umfassend ein $\alpha$-kristallkeimbildendes Mittel und/oder ein $\beta$-kristallkeimbildendes Mittel.

**5.** Extrudiertes lineares Polypropylen nach Anspruch 4, wobei das lineare Polypropylen ein lineares Propylenblockcopolymer ist.

**6.** Extrudiertes lineares Polypropylen nach Anspruch 5, wobei das lineare Polypropylen einen Ethylengehalt von weniger als 15 Gew.-% hat.

**7.** Extrudiertes lineares Polypropylen nach einem der Ansprüche 5 oder 6, wobei das Polypropylen eine Polypropylenmatrix und einen Ethylen-Propylen-Kautschuk (EPR) umfasst.

**8.** Extrudiertes lineares Polypropylen nach Anspruch 7, wobei der Ethylen-Propylen-Kautschuk (EPR) einen Ethylengehalt von weniger als 50 Gew.-% hat.

**9.** Kügelchen, umfassend ein extrudiertes lineares Polypropylen nach einem der Ansprüche 1 bis 8.

**10.** Schaum, umfassend ein extrudiertes lineares Polypropylen nach einem der Ansprüche 1 bis 8.

**11.** Schaum nach Anspruch 10, wobei der Schaum eine Dichte von weniger als 400 kg/m$^3$ hat.

**12.** Artikel, umfassend ein extrudiertes lineares Polypropylen nach einem der Ansprüche 1 bis 8 und/oder Kügelchen nach Anspruch 9 und/oder Schaum nach einem der Ansprüche 10 oder 11.

**13.** Verwendung von extrudiertem linearen Polypropylen nach einem der Ansprüche 1 bis 8 oder von Kügelchen nach Anspruch 9, um einen geschäumten Artikel zu herzustellen.

**Revendications**

**1.** Polypropylène linéaire extrudé ayant

a) un $MFR_2$, mesuré conformément à la norme ISO 1133 sous une charge de 2,16 kg à 230°C, de 0,01 à 1,00 g/10 min, et
b) un indice d'expansibilité (FN) supérieur à 0,25 N, l'indice d'expansibilité étant défini par l'intégrale

$\int_{\lambda=0}^{\lambda max} F \cdot d\lambda$, où $\lambda$ est le rapport d'étirage et F est la force en cN enregistrée en fonction du rapport d'étirage $\lambda$,

   c) un indice de ramification g' de 0,95 à 1,00.

2.  Polypropylène linéaire extrudé selon la revendication 1, ayant une consistance à l'état fondu inférieure à 3 cN.

3.  Polypropylène linéaire extrudé selon la revendication 1 ou 2, ayant un point de cristallisation $T_c$, mesuré par DSC conformément à la norme ISO 3146 avec une vitesse de chauffage/refroidissement de 10°C, de 110 à 135°C.

4.  Polypropylène linéaire extrudé selon l'une quelconque des revendications 1 à 3, comprenant un agent de nucléation par $\alpha$-cristallisation et/ou un agent de nucléation par $\beta$-cristallisation.

5.  Polypropylène linéaire extrudé selon la revendication 4, dans lequel le polypropylène linéaire est un copolymère séquencé de propylène linéaire.

6.  Polypropylène linéaire extrudé selon la revendication 5, dans lequel le polypropylène linéaire a une teneur en éthylène inférieure à 15 % en poids.

7.  Polypropylène linéaire extrudé selon l'une quelconque des revendications 5 et 6, dans lequel le polypropylène comprend une matrice de polypropylène et un caoutchouc d'éthylène-propylène (EPR).

8.  Polypropylène linéaire extrudé selon la revendication 7, dans lequel le caoutchouc d'éthylène-propylène (EPR) a une teneur en éthylène inférieure à 50 % en poids.

9.  Perles comprenant un polypropylène linéaire extrudé selon l'une quelconque des revendications 1 à 8.

10.  Mousse comprenant un polypropylène linéaire extrudé selon l'une quelconque des revendications 1 à 8.

11.  Mousse selon la revendication 10, laquelle mousse a une masse volumique inférieure à 400 kg/m$^3$.

12.  Article comprenant un polypropylène linéaire extrudé selon l'une quelconque des revendications 1 à 8 et/ou des perles selon la revendication 9 et/ou une mousse selon l'une quelconque des revendications 10 et 11.

13.  Utilisation du polypropylène linéaire extrudé selon l'une quelconque des revendications 1 à 8 ou des perles selon la revendication 9 pour produire un article expansé.

Figure 1: Determination of the Foamability Number (FN)

| Foaming with 0.80wt% $CO_2$ | Foaming with 5wt% Butane (Univ. Toronto) |

**Figure 2:** Correlation for minimum foam density and Foamability Number - with FN > 0.30 low density foam is achieved (< 400 kg/m³)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1323779 A
- US 5929127 A
- JP S58129025 B
- JP H0350245 B
- EP 0316187 A2

- EP 0177961 A
- US 3300459 A
- US 5919877 A
- EP 0060090 A1

**Non-patent literature cited in the description**

- **P. SPITAEL ; CH. W. MACOSKO.** *Polymer Engineering and Science,* November 2004, vol. 44 (11

- **B.H. ZIMM ; W.H. STOCKMEYER.** *J. Chem. Phys.,* 1949, vol. 17, 1301
- **ENICHEM.** *DUTRAL, Ethylene-propylene Elastomers,* 1991, 1-4